# EUROPEAN PATENT APPLICATION

(11) **EP 4 718 200 A1**
(43) Date of publication of application: **01.04.2026**
(21) Application number: 25200248.0
(22) Date of filing: 04.09.2025
(51) Int. Cl.: G05F 1/563, G05F 1/575, H02M 1/00, H02M 3/156

(54) **STABILIZED POWER SUPPLY APPARATUS**

(30) Priority: 25.09.2024 JP 2024166121
(71) Applicant: Mitsumi Electric Co., Ltd., Tama-Shi, Tokyo 206-8567 (JP)
(72) Inventor: TABUCHI, Hitoshi, Tokyo, 206-8567 (JP); FUKUYA, Satoru, Tokyo, 206-8567 (JP)
(74) Representative: Epping - Hermann - Fischer

(57) **Abstract**

Disclosed is a stabilized power supply apparatus including: a switching power supply apparatus (20); and a current stabilizing circuit (10) connected at a stage before or after the switching power supply apparatus. The stabilized power supply apparatus converts a DC input voltage supplied from a DC power supply and outputs a stable DC voltage, and the current stabilizing circuit includes: a current control transistor (M1) connected in series between an input terminal and an output terminal; a low-pass filter (LPF) connected to the output terminal; an operational amplifier circuit (AMP) that controls the current control transistor according to a potential difference between a feedback voltage of an output returned through the low-pass filter and a predetermined voltage; and an amplitude limiting circuit (D1, D2) that limits an amplitude range of the feedback voltage.

## Description

### TECHNICAL FIELD

The present disclosure relates to a stabilized power supply apparatus that supplies a stable DC voltage to a load, and relates to a technique effective for use in improving the transient characteristics of DC power supplies, for example.

### DESCRIPTION OF RELATED ART

In systems such as drive recorders that supply DC voltage from the battery to the load via a relatively long power cable, a switching power supply (DC-DC converter) is provided on the device side to prevent voltage drops and improve efficiency. In such a system in which current is supplied from the battery to the switching power supply with a long power cable, radiated noise is emitted from the power cable following the switching operation on the power supply side, which adversely affects other electronic devices such as TV broadcasting receivers. Such radiation noise is caused by the current flowing through the power cable fluctuating violently due to the switching operation in the DC-DC converter.

Thus, there has been an invention of a DC power supply apparatus (see FIG. 8) including a current stabilizing circuit at a stage before a switching power supply apparatus (JP-A2023-156011). The current stabilizing circuit includes a low-resistance element and a current control transistor connected in series between the current input terminal and the current output terminal, a low-pass filter connected to the current output terminal, and an operational amplifier that controls the current control transistor and applies a constant current to the transistor when the load changes rapidly.

The DC power supply apparatus described in JP-A2023-156011 has a large response delay of the feedback signal (voltage) in the current stabilizing circuit, resulting in a long settling time of the output voltage and a large undershoot of the output voltage. It is clear that there is room for improvement. In addition, a bipolar transistor is used as the current control transistor that constitutes the current stabilizing circuit, and a current detection resistor is connected in series with the transistor, resulting in large power loss. Furthermore, since the current control transistor is driven and controlled by an amplifier whose input is the voltage converted by the current detection resistor and the output feedback signal, the loop stability is not good and oscillation easily occurs. In addition, when the input voltage drops, the output voltage easily becomes at or below the minimum operating voltage of the load, indicating that there is room for improvement.

### SUMMARY OF THE INVENTION

The present disclosure has been made in view of the above-described problems, and an objective thereof is to provide a stabilized power supply apparatus that can reduce the response delay of the feedback signal in the current stabilizing circuit, shorten the settling time of the output voltage, and reduce the undershoot of the output voltage.

Another objective of the present disclosure is to reduce power loss in the current stabilizing circuit, to reduce costs, and to improve loop stability in the stabilized power supply apparatus that includes the current stabilizing circuit.

To achieve at least one of the above-mentioned objectives, according to an aspect of the present disclosure, there is provided a stabilized power supply apparatus comprising:
a switching power supply apparatus; and
a current stabilizing circuit connected at a stage before or after the switching power supply apparatus, wherein
the stabilized power supply apparatus converts a DC input voltage supplied from a DC power supply and outputs a stable DC voltage, and
the current stabilizing circuit includes:
   a current control transistor connected in series between an input terminal and an output terminal;
   a low-pass filter connected to the output terminal;
   an operational amplifier circuit that controls the current control transistor according to a potential difference between a feedback voltage of an output returned through the low-pass filter and a predetermined voltage; and
   an amplitude limiting circuit that limits an amplitude range of the feedback voltage.

### BRIEF DESCRIPTION OF DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG. 1 is a block diagram showing an embodiment of a configuration of a stabilized power supply apparatus according to the present disclosure;
FIG. 2 is a circuit diagram showing a first example of a current stabilizing circuit that constitutes the stabilized power supply apparatus of FIG. 1;
FIG. 3 is a circuit diagram showing a specific example of a constant voltage source that constitutes the stabilized power supply apparatus in the example;
FIGS. 4A and 4B show the frequency characteristics of gain and phase of the conventional current stabilizing circuit and the example current stabilizing circuit; FIG. 4A is the frequency characteristic diagram of the conventional current stabilizing circuit and FIG. 4B is the frequency characteristic diagram of the example current stabilizing circuit;
FIG. 5 shows the difference in waveforms without and with diodes for limiting the amplitude of the feedback signal in the current stabilizing circuit, in which A shows the waveform diagrams without the diodes and B shows the waveform diagrams with the diodes;
FIG. 6 is a circuit diagram showing a second example of the current stabilizing circuit;
FIG. 7A is a circuit diagram showing an amplitude limiting circuit of the FB voltage that constitutes the current stabilizing circuit in a third example, and FIGS. 7B to 7D are circuit diagrams showing modification examples of the amplitude limiting circuit; and
FIG. 8 is a circuit diagram showing an example of a conventional current stabilizing circuit.

### DETAILED DESCRIPTION

Hereinafter, one or more embodiments of the present invention will be described with reference to the drawings. However, the scope of the present invention is not limited to the disclosed embodiments.

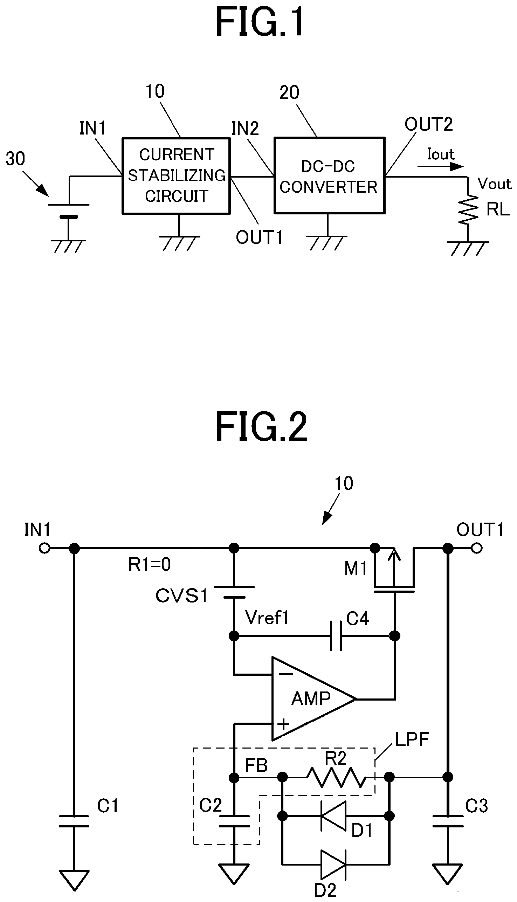

FIG. 1 shows the schematic structure of the stabilized power supply apparatus according to the present disclosure.

The stabilized power supply apparatus shown in FIG. 1 includes a current stabilizing circuit 10 and a DC-DC converter 20 which is a switching power supply apparatus connected at the stage after the current stabilizing circuit 10. A voltage from a DC power supply 30 such as a battery is input to the input terminal IN1 of the current stabilizing circuit 10, the input terminal IN2 of the DC-DC converter 20 is connected to the output terminal OUT1 of the current stabilizing circuit 10, and the output terminal OUT2 of the DC-DC converter 20 is connected to the load RL.

In a case where the stabilized power supply apparatus of the present embodiment is used as a power supply apparatus to supply power voltage to an in-vehicle electronic device, the current stabilizing circuit 10 and the DC power supply 30 may be configured to be connected by a cable.

Although not restricted, when the current stabilizing circuit 10 and the DC-DC converter 20 are mounted on a single board such as a printed wiring board, the current stabilizing circuit 10 and the DC-DC converter 20 may be configured to be connected by a power line consisting of a printed wiring pattern formed on the board.

### (First Example)

FIG. 2 shows a first example of the current stabilizing circuit 10 included in the stabilized power supply apparatus of the present embodiment.

As shown in FIG. 2, the current stabilizing circuit 10 in this example includes a current control transistor M1 consisting of a P-channel MOS transistor provided between the input terminal IN1 and the output terminal OUT1, an operational amplifier (operational amplifier circuit) AMP that controls the transistor M1, and a constant voltage source CVS1 that is connected between the input terminal IN1 and the inverting input terminal (-) of operational amplifier AMP to generate a voltage Vref1 to be applied to the inverting input terminal. The constant voltage source CVS1 generates the voltage Vref1 such that the operational amplifier AMP operates the current control transistor M1 at all times.

In the current stabilizing circuit 10 in this example, a loop stabilizing capacitor C4 is connected between the inverting input terminal (-) of the operational amplifier AMP and the output terminal OUT1.

In addition, the current stabilizing circuit 10 includes: a noise-reducing capacitor C1 connected between the above input terminal IN1 and the ground point; and a low-pass filter LPF provided between the above output terminal OUT1 and the non-inverting input terminal (+) of the operational amplifier AMP. In addition, a smoothing capacitor C3 is connected between the output terminal OUT1 and the ground point to stabilize the voltage of the output terminal OUT1. The smoothing capacitor C3 may be provided between the ground point and the input terminal IN2 of the DC-DC converter 20 at the later stage or outside the current stabilizing circuit 10.

The above low-pass filter LPF includes a resistor R2 connected between the output terminal OUT1 of the current stabilizing circuit 10 and the non-inverting input terminal (+) of the operational amplifier AMP, and a capacitor C2 connected between the non-inverting input terminal (+) of the operational amplifier AMP and ground point. The time constant is set so that, among the voltage change component of current output terminal OUT1, the high-frequency component corresponding to the switching frequency of the DC-DC converter 20 at the later stage is removed and the low-frequency component corresponding to the servo band (servo control frequency) of the DC-DC converter 20 is passed through. As a result, the low-pass filter LPF works so that only the voltage change of the output terminal OUT1 caused by the servo control of the DC-DC converter 20 at the later stage is transmitted to the operational amplifier AMP, and the voltage change of the current output terminal OUT1 caused by the switching control is not transmitted to the operational amplifier AMP.

Furthermore, in the current stabilizing circuit 10 in this example, in parallel with the resistor R2 that constitutes the low-pass filter LPF, there are connected a diode D1 that is forward from the output terminal OUT1 toward the non-inverting input terminal (+) of the operational amplifier AMP, and conversely, a diode D2 that is forward from the non-inverting input terminal (+) of the operational amplifier AMP toward the output terminal OUT1. Diodes D1 and D2 may be configured using general PN junction diodes, or MOS transistors, as described below. According to the above configuration, by the forward voltage of diodes D1 and D2, it is possible to limit the amplitude range of the feedback signal (voltage) FB returned to the non-inverting input terminal (+) of the operational amplifier AMP from the output terminal OUT1.

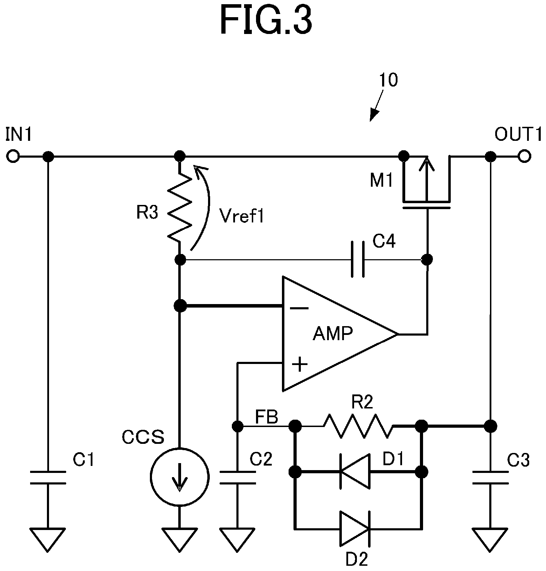

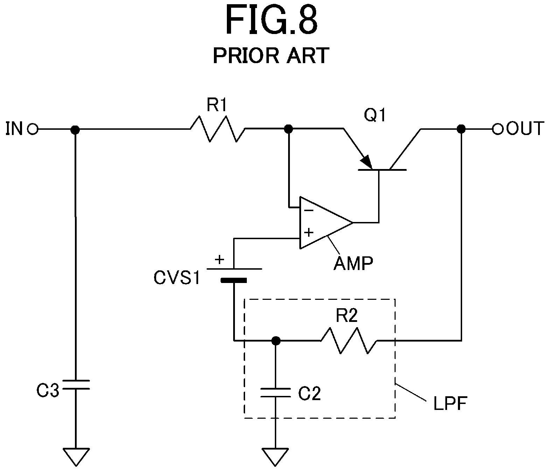

The constant voltage source CVS1, which generates the voltage Vref1 to be applied to the input terminal of the operational amplifier AMP, can be provided on the non-inverting input terminal (+) side of the operational amplifier AMP (see FIG. 8). However, as shown in this example, providing the constant voltage source on the inverting input terminal (-) side of the operational amplifier AMP has an advantage that the constant voltage source can be configured with a simpler circuit than when providing it on the non-inverting input terminal (+) side, and the occupied area can be reduced. Specifically, the constant voltage source CVS1 to be provided on the inverting input terminal (-) side can be composed of a resistor R3 and a constant current source CCS connected in series between the input terminal IN1 and the ground point, as shown in FIG. 3.

Next, the differences from the conventional current stabilizing circuit shown in FIG. 8 and the advantages of the current stabilizing circuit 10 in this example (FIG. 2) are explained.

First, the conventional current stabilizing circuit (FIG. 8) uses a bipolar transistor as the current control transistor Q1 and connects a resistor R1 of about 10Ω between the input terminal IN and the current control transistor Q1 for noise suppression, while the current stabilizing circuit 10 of this example uses MOS transistor as a current control transistor and there is no resistor between the input terminal IN1 and the current control transistor M1. By not providing a resistor in series with M1, the number of components can be reduced to lower costs, and power loss in the resistor (R1) can be eliminated to improve power efficiency.

The second difference is that in the current stabilizing circuit 10 of this example (FIG. 3), a capacitor C4 is connected between the inverting input terminal (-) of the operational amplifier AMP that controls the current control transistor M1 and the output terminal OUT1, while no such capacitor is provided in the conventional current stabilizing circuit (FIG. 8).

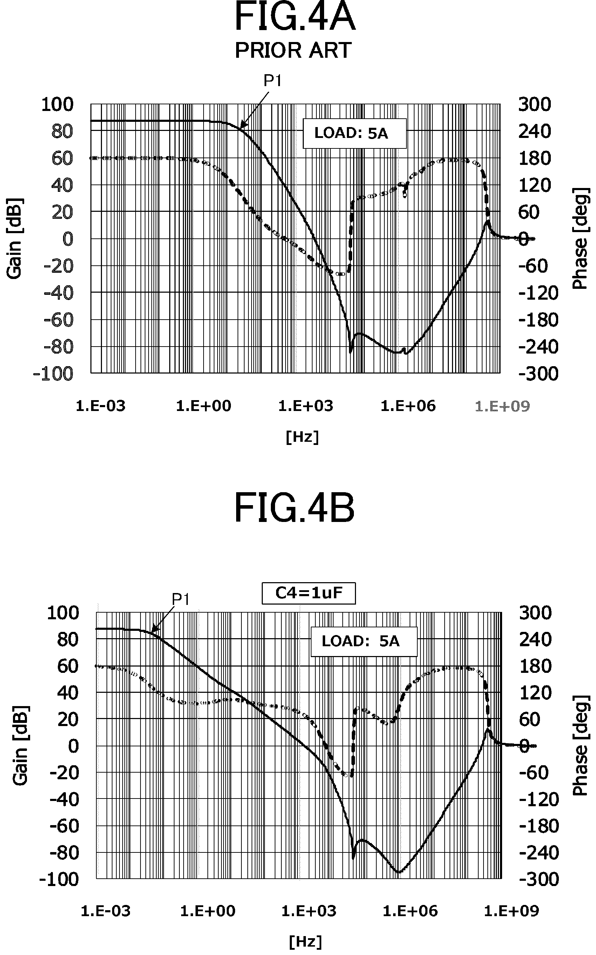

FIGS. 4A and 4B show the frequency characteristics of gain of the operational amplifier and the frequency characteristics of phase of the operational amplifier without the capacitor C4 and with the capacitor C4 of 1 µF, respectively, when the load of the current stabilizing circuit is 5A. FIG. 4A shows the case without the capacitor C4, and FIG. 4B shows the case with the capacitor C4. In FIGS. 4A and 4B, the solid line is the frequency characteristics of gain and the dashed line is the frequency characteristics of phase. Comparing FIGS. 4A and 4B, it can be seen that the first pole P1 of the gain characteristic is shifted to the lower frequency region in FIG. 4B with the capacitor C4, resulting in better loop stability and making the circuit less likely to oscillate.

The third difference is that the current stabilizing circuit 10 in this example (FIG. 3) has diodes D1 and D2 that limit the amplitude range of the feedback signal FB in parallel with the resistor R2 that constitutes the low-pass filter LPF, while the conventional current stabilizing circuit (FIG. 8) has no such diodes.

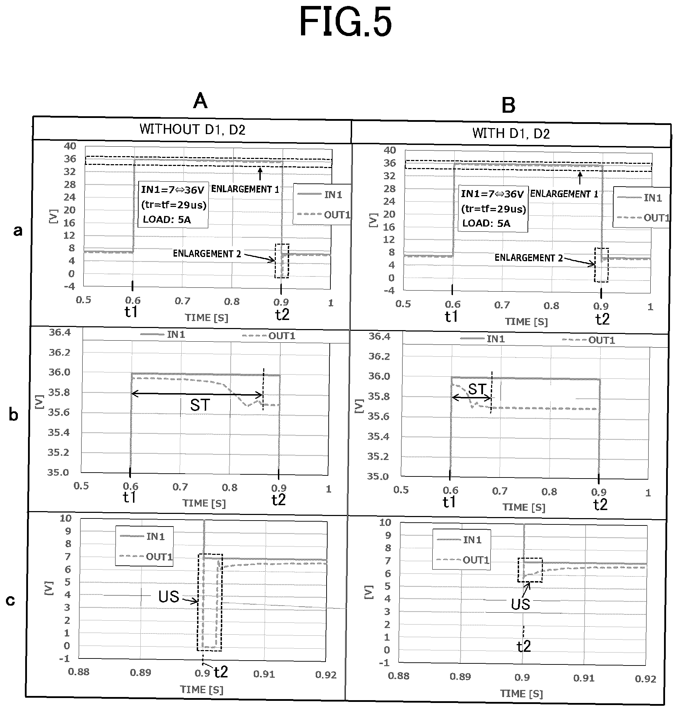

FIG. 5 shows the waveforms of the output voltage when the input voltage is ramped up from 7 V to 36 V at timing t1 and ramped down to 7 V at t2. In FIG. 5, A shows the case without the diodes D1 and D2, and B shows the case with the diodes D1 and D2. In FIG. 5, "b" shows enlarged waveforms in the voltage range of 35 V to 36 V in "a", and "c" shows enlarged waveforms in the range of 0.9 ± 0.02 s in the vicinity of time t2 in "a".
The solid line is the input voltage waveform and the dashed line is the output voltage waveform.

From FIG. 5, it can be seen that the undershoot US is smaller with the diodes D1 and D2 than the case without the diodes D1 and D2, and the settling time ST is shorter.

### (Second Example)

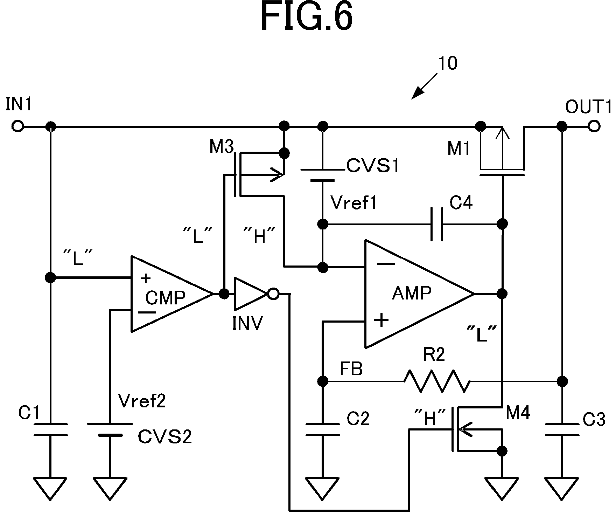

FIG. 6 shows a second example of a current stabilizing circuit 10 included in a stabilized power supply apparatus according to the present disclosure.

The current stabilizing circuit 10 in this example is designed to reduce the risk that when the stabilized power supply apparatus shown in FIG. 1 is used in an in-vehicle system, the voltage input to the input terminal IN1 from the battery drops due to engine cranking or other factors, causing the voltage at the output terminal OUT1 to drop below the minimum operating voltage of the load and turning the load off.

Specifically, the current stabilizing circuit 10 in this example includes: a comparator (voltage comparison circuit) CMP that compares the voltage at the input terminal IN1 with a voltage Vref2 from a constant voltage source CVS2 to detect that the voltage at the input terminal IN1 has become at or below Vref2; and a P-channel MOS transistor M3 connected between the input terminal IN1 and the inverting input terminal (-) of the operational amplifier AMP. This transistor M3 then operates as a switch element that is turned on and off by the output of the above comparator CMP.

The current stabilizing circuit 10 in this example (FIG. 6) also includes: an inverter INV that inverts the output of the above comparator CMP; and an N-channel MOS transistor M4 connected between the gate terminal of current control transistor M1 and the ground point. This transistor M4 then operates as a switch element that is turned on and off by the output of the above inverter INV. The transistor M4 may be a MOS transistor that constitutes the output stage of the operational amplifier AMP. In other words, the output of the comparator CMP (including inverter INV) may be configured to change the output of operational amplifier AMP to a low level "L" when the voltage of the input terminal IN1 drops.

In the current stabilizing circuit 10 in this example with the above configuration, both MOS transistors M3 and M4 are turned off in the normal operating state and operate in the same manner as the current stabilizing circuit of the first example (FIG. 6). On the other hand, when the comparator CMP detects that the voltage of the input terminal IN1 has become at or below Vref2, the output of comparator CMP changes from a high level "H" to a low level "L", and the MOS transistors M3 and M4 are both turned on.

This lowers the gate voltage of the current control transistor M1 to the ground potential, which puts M1 in a sufficiently strong ON state and makes the voltage at the output terminal OUT1 equal to the voltage at the input terminal IN1. As a result, the risk of the voltage at the output terminal OUT1 falling below the minimum operating voltage of the load and causing the load to turn off can be reduced.

In this example of the current stabilizing circuit 10, the constant voltage source CVS1 can also be provided on the non-inverting input terminal (+) side of the operational amplifier AMP instead of the inverting input terminal (-) side, in which case MOS transistor M3 is unnecessary. If the constant voltage source CVS1 is provided on the non-inverting input terminal (+) side of the operational amplifier AMP, the voltage input to the inverting input terminal (-) and non-inverting input terminal (+) of the comparator CMP can be reversed from the circuit in FIG. 6, so that the inverter INV can be omitted.

### (Third Example)

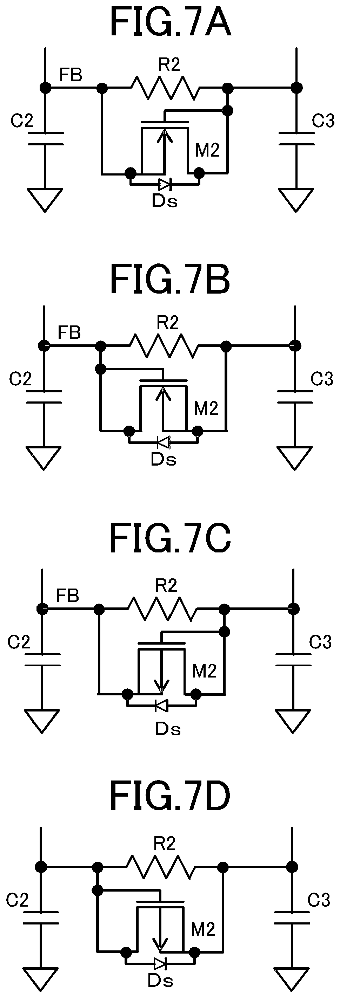

FIG. 7A shows a third example of the current stabilizing circuit 10, and FIGS. 7B through 7D show modification examples thereof.

The third example of the current stabilizing circuit 10, as shown in FIG. 7A, uses so-called diode-connected MOS transistors as diodes D1 and D2, which are connected in parallel with the resistor R2 that constitutes the low-pass filter LPF and limit the amplitude of the feedback signal FB.

Specifically, the function of diode D1, which has a forward direction toward the non-inverting input terminal of the operational amplifier AMP, is realized by the drain-source channel controlled by the gate voltage of the N-channel MOS transistor M2 whose gate and drain terminals are connected to the output terminal OUT. It is also configured so that the function of diode D2 in the opposite direction of diode D1 is realized by the body diode Ds present in the MOS transistor M2. This configuration reduces the number of elements that make up the current stabilizing circuit 10, thereby reducing the mounting area.

Among the modification examples shown in FIGS. 7B to 7D, the modification example shown in FIG. 7B realizes the function of diode D2 with the drain-source channel of N-channel MOS transistor M2 whose gate and drain terminals are connected to the non-inverting input terminal of operational amplifier AMP, and the function of diode D1 is configured to be realized by the body diode Ds of MOS transistor M2.

The modification example of FIG. 7C is configured so that the function of diode D1, which is in the forward direction toward the non-inverting input terminal of the operational amplifier AMP, is realized by the body diode Ds of the P-channel MOS transistor M2 whose gate terminal and drain terminal are connected to the output terminal OUT, and the function of diode D2, which is in the reverse direction of D1, is realized by the drain-source channel of MOS transistor M2.

The modification example of FIG. 7D is that the function of diode D1 is realized by the drain-source channel of P-channel MOS transistor M2 whose gate and drain terminals are connected to the non-inverting input terminal of operational amplifier AMP, and the function of diode D2 is realized by the body diode Ds of MOS transistor M2.

The present disclosure has been specifically described above based on the embodiment, but the present disclosure is not limited to the aforementioned embodiment. For example, the above embodiment shows the use of a MOS transistor as a current control transistor constituting the current stabilizing circuit 10, but a bipolar transistor may be used instead of a MOS transistor.

In the stabilized power supply apparatus of the above embodiment, the current stabilizing circuit 10 is provided at a stage before a DC-DC converter 20 as a switching power supply apparatus. However, the current stabilizing circuit 10 can be installed at a stage after the DC-DC converter 20.

Furthermore, with respect to the third example, two diode-connected MOS transistors that carry current in opposite directions to each other can be provided, instead of having one MOS transistor M2 to function as diodes D1 and D2 to limit the amplitude of the FB voltage as shown in FIGS. 7A to 7D.

According to the above-described embodiments of the present disclosure, there is provided a stabilized power supply apparatus comprising:
a switching power supply apparatus; and
a current stabilizing circuit connected at a stage before or after the switching power supply apparatus, wherein
the stabilized power supply apparatus converts a DC input voltage supplied from a DC power supply and outputs a stable DC voltage, and
the current stabilizing circuit includes:
   a current control transistor connected in series between an input terminal and an output terminal;
   a low-pass filter connected to the output terminal;
   an operational amplifier circuit that controls the current control transistor according to a potential difference between a feedback voltage of an output returned through the low-pass filter and a predetermined voltage; and
   an amplitude limiting circuit that limits an amplitude range of the feedback voltage.

According to the stabilized power supply apparatus with the above configuration, since the current stabilizing circuit includes an amplitude limiting circuit that limits the amplitude range of the feedback voltage of the output returned to the input terminal of the operational amplifier circuit (operational amplifier) via a low-pass filter, the response delay of the feedback signal is reduced, the output voltage settling time can be shortened and overshoot of the output voltage can be reduced. In addition, since the power supply apparatus includes a switching power supply apparatus and a current stabilizing circuit, noise generated by the switching power supply apparatus can be absorbed and reduced by the current stabilizing circuit.

A stabilized power supply apparatus according to the above-described embodiments of the present disclosure has the effect of reducing the response delay of the feedback signal in the current stabilizing circuit, shortening the settling time of the output voltage, and reducing the undershoot of the output voltage.

Although some embodiments of the present invention have been described and illustrated in detail, the disclosed embodiments are made for purposes of not limitation but illustration and example only. The scope of the present invention should be interpreted by terms of the appended claims.

## Claims

1. A stabilized power supply apparatus comprising:
a switching power supply apparatus (20); and
a current stabilizing circuit (10) connected at a stage before or after the switching power supply apparatus, wherein
the stabilized power supply apparatus converts a DC input voltage supplied from a DC power supply and outputs a stable DC voltage, and
the current stabilizing circuit includes:
a current control transistor (M1) connected in series between an input terminal and an output terminal;
a low-pass filter (LPF) connected to the output terminal;
an operational amplifier circuit (AMP) that controls the current control transistor according to a potential difference between a feedback voltage of an output returned through the low-pass filter and a predetermined voltage; and
an amplitude limiting circuit (D1, D2) that limits an amplitude range of the feedback voltage.

2. The stabilized power supply apparatus according to claim 1, wherein
the low-pass filter includes:
a resistor (R2) provided between one input terminal of the operational amplifier circuit and the output terminal; and
a capacitor (C2) connected between a fixed potential point and the one input terminal of the operational amplifier circuit, and
the amplitude limiting circuit includes a first rectifier and a second rectifier each connected in parallel with the resistor, and the first rectifier and the second rectifier each have a forward voltage and are connected so that rectification directions of the first rectifier and the second rectifier are opposite to each other.

3. The stabilized power supply apparatus according to claim 2, wherein the first rectifier is a diode-connected MOS transistor, and the second rectifier is a body diode of the MOS transistor.

4. The stabilized power supply apparatus according to claim 2, wherein the current control transistor is connected between the input terminal and the output terminal without a resistor.

5. The stabilized power supply apparatus according to claim 4, wherein a capacitor (C4) is connected between the output terminal and an inverting input terminal of the operational amplifier circuit.

6. The stabilized power supply apparatus according to any one of claims 1 to 5, further comprising:
a switch (M4) connected between a ground point and a control terminal of the current control transistor; and
a voltage comparison circuit (CMP) that compares a voltage of the input terminal with a predetermined threshold voltage, wherein
in response to the voltage comparison circuit detecting that the voltage of the input terminal has dropped below the threshold voltage, an output signal of the voltage comparison circuit causes the switch to be turned on and the current control transistor to be strongly turned on.
